# EUROPEAN PATENT SPECIFICATION

(11) **EP 3 308 638 B1**
(45) Date of publication and mention of the grant of the patent: **29.01.2020**
(21) Application number: 17193989.5
(22) Date of filing: 29.09.2017
(51) Int. Cl.: A01G 31/02, A01G 9/029

(54) **IMPROVED SUPPORT DEVICE FOR HYDROPONIC CULTIVATION**
VERBESSERTE UNTERSTÜTZUNGSVORRICHTUNG FÜR HYDROPONISCHE KULTUR
DISPOSITIF DE SUPPORT AMÉLIORÉ POUR CULTURE HYDROPONIQUE

(30) Priority: 13.10.2016 IT 201600103095
(43) Date of publication of application: 18.04.2018
(73) Proprietor: RO-SA PLAST S.p.A., 33080 Porcia (PN) (IT)
(72) Inventor: CATTARUZZA, Attilio, 33080 Porcia (IT)
(74) Representative: Cercenà, Alice

(56) References cited:
- EP-A2- 0 464 954
- WO-A1-2016/007005
- WO-A1-2016/147128
- WO-A1-2016/151186
- IT-A1- TV20 130 042
- JP-A- S6 091 926
- US-A1- 2012 137 580

## Description

### TECHNICAL FIELD OF THE INVENTION

The present invention relates to an improved hydroponic culture support device.

### PRIOR ART OF THE INVENTION

The possibility and suitability of cultivating vegetable crops or floricultural crops in water has long been known. WO 2016/007005 A1, JP S60 91926 A, US2012/137580 A1, EP 0 464 954 A2, WO 2016/147128 A1 illustrate for example several hydroponic support devices.

In particular, for cultivating short-cycle, leafy vegetables such as lettuce, basil, radicchio, valerian, arugula, parsley, spinach, chard and the like, it is generally preferable to use a type of hydroponic culture on "floating panels" (floating system), wherein supports composed of polystyrene panels are used, on which special transverse through holes are made, suitable to accommodate a substrate whereon the seeds of the desired products to be cultivated are sown.

The panel is then introduced to float inside a tank containing a solution composed of water and nutrients wherein the root system of the crop develops directly.

However, this solution has many disadvantages: firstly, the polystyrene has great structural fragility that may entail the breakage of the panel during its handling, both during sowing and during removal of the cultivated product, resulting in a loss of seed or of the final product. Obviously, such panels cannot be walked on.

In addition, a polystyrene panel absorbs the culture liquid, allowing bacteria and mold to proliferate, which are unsuitable for the health of the product.

Another important element to consider is that conventional polystyrene panels are not recyclable and therefore, once they have been used for production purposes, they must be appropriately disposed of, resulting in increased costs in economic and environmental terms.

In this regard, recent regulations require a gradual withdrawal from the market of this type of panel and a gradual divestiture of polystyrene panels currently in use in order to favor the use of biodegradable, and therefore more sustainable, materials.

As a partial solution to such drawbacks, the Italian patent application IT TV20 130 042 A1 provides for a hydroponic culture support device consisting of a floating panel made of polymeric material, consisting of a plurality of hollow tubular elements arranged side-by-side and parallel, so as to define therebetween a seat, having an essentially V-shaped configuration, open at the bottom, for housing the substrate whereon the seeds are deposited.

In particular, the seat has lateral walls having a constant inclination and is provided with slightly curved edges at the top that join with the upper surface of the panel. Furthermore, the lower opening connects to the inner side walls of the seat itself according to a convergent arched tendency at the center, thus creating a pair of undercuts.

However, experimental evidence has shown that this configuration is not optimal for the desired use: first of all, the volume defined by the V-shaped seats is too large with respect to the amount of inert material actually needed for planting the seeds and for the subsequent development of the root systems of the seedlings, resulting in waste of material, usually consisting of perlite granules, and increased costs.

On the other hand, the seats must be large enough to allow them to be filled with the inert material mechanically and to facilitate the operations, also mechanized, of seed positioning, plant extraction, cleaning and sterilization of the panel at the end of the process.

In addition, the panel must be configured so that once in use, and therefore having the seats properly filled with inert substrate, the panel may float on the nutrient solution so that the surface of the liquid laps against the roots of the vegetable.

It would on the other hand be desirable, and such is the main task of the present invention, to provide a hydroponic culture support device that overcomes the drawbacks of the prior art, its form being thus improved to allow essentially all the necessary operations for the development of the culture to be performed mechanically.

Within the scope of the aforementioned task, an important object is to provide a hydroponic culture support device which avoids, or at least reduces, the waste of inert material and seeds, while also facilitating cleaning and disinfection operations of the same at the end of the process, in such a way as to allow its subsequent re-use.

Another object of the present invention is to provide support devices for modular hydroponic cultures, which may be easily and reliably stacked one on top of the other, allowing savings in terms of the space required for storage.

Another important object of the present invention is to provide a hydroponic culture support device that may be obtained with a reliable and easily implementable industrial process.

Last but not least, the object of the present invention is to provide a hydroponic culture support device which accomplishes the task and the above-stated objects at competitive production costs, so that its use is advantageous also from an economic point of view, and is obtainable with common and known installations, machinery and equipment.

The task and the above objects, and others that will be more apparent hereinafter, are achieved by a hydroponic culture support device as defined in claim 1.

### BRIEF DESCRIPTION OF THE DRAWINGS

Advantages and features of the invention will become more apparent from the following description, provided by way of illustrative and non-limiting example, with reference to the accompanying figures, wherein:
- figure 1 is a perspective view of a hydroponic culture support device according to the present invention;
- figure 2 is a plan view of the support device of figure 1;
- figure 3 shows the support device of the preceding figures, sectioned along the plane A-A of figure 2;
- figure 3A shows, with an enlarged view, the detail circled in figure 3;
- figure 3B shows, with an enlarged section view, a particularly advantageous embodiment of a seat of a support device according to the present invention;
- figure 4 shows the support device of the preceding figures, sectioned along the plane B-B of figure 2;

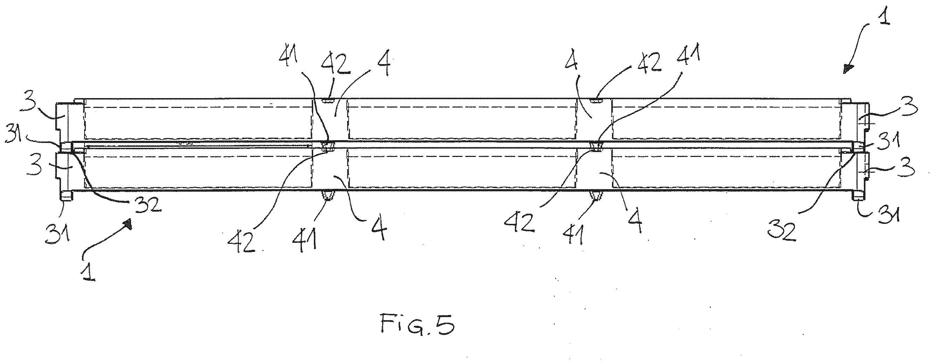

- figure 5 shows, in a side view, a pair of support devices according to the present invention arranged stacked one on top of the other.

### DETAILED DESCRIPTION OF THE INVENTION

With reference to the aforementioned figures, a support device according to the present invention suitable for use in hydroponic crops of the "floating system" type is indicated at reference numeral 1.

It is to be understood that the directional terms used to describe the present invention, such as "above, below, vertical, horizontal, lower and upper", as well as any other similar directional term, should be interpreted with reference to a hydroponic culture support device when in use, as shown in the accompanying figures.

Said device 1 essentially comprises a substantially parallelepiped-shaped panel, preferably made of a single piece of polymeric material, such as polyethylene, using the blow-molding technique, advantageously configured so as to float on a culture liquid.

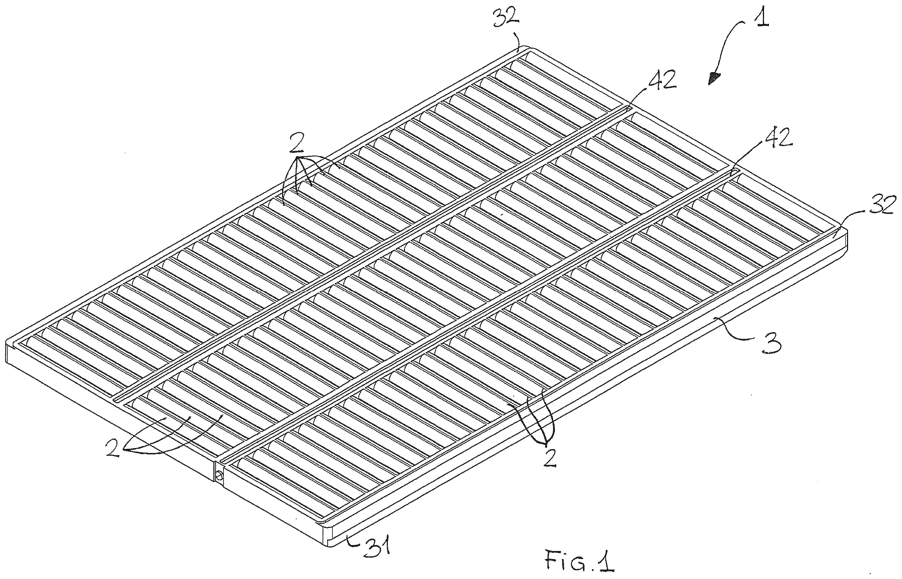

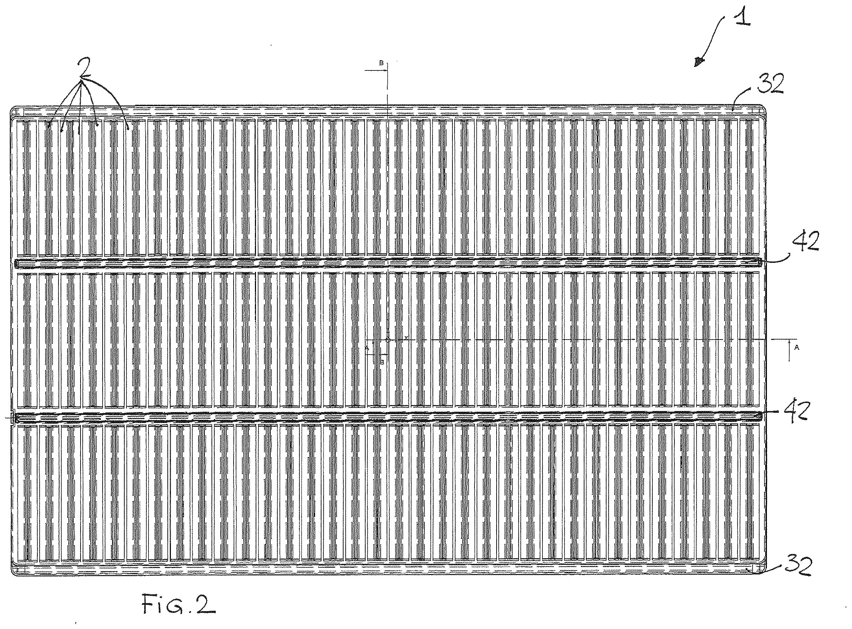

In particular, as shown in figures 1, 2 and 3, said panel 1 is composed of a plurality of distinct elongated tubular elements 2, of a length desired according to needs, arranged side-by-side and spaced apart in parallel to create a plurality of seats 20 suitable to contain an inert substrate for hydroponic cultures such as for example perlite granules or other known material, each of said seats 20 being formed between two adjacent tubular elements 2 and extending between an upper opening 21 and a lower opening 22.

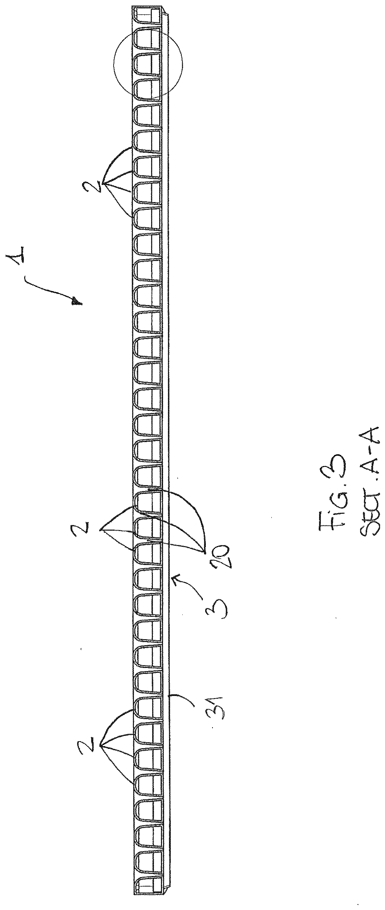

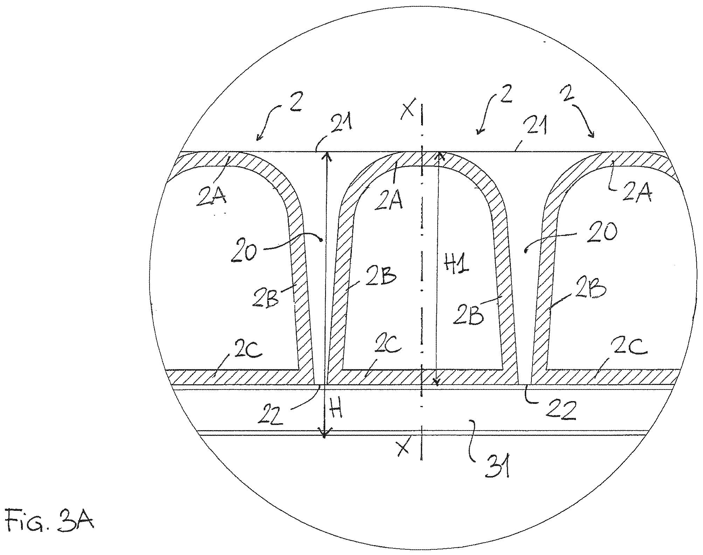

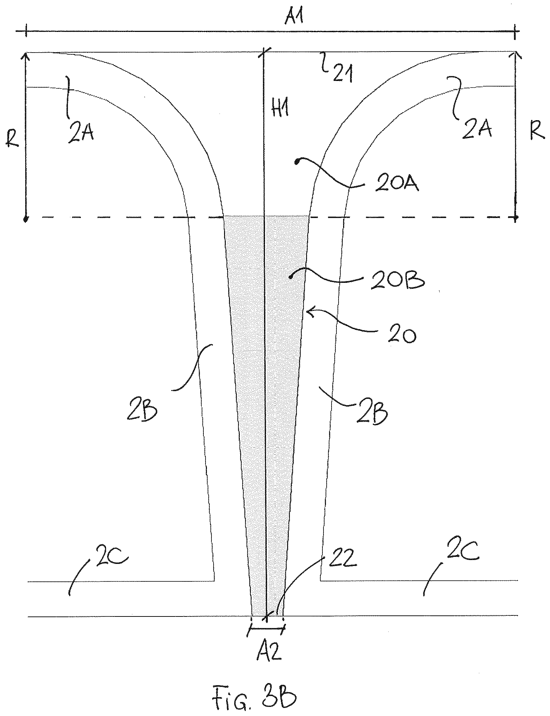

According to an advantageous feature of the present invention, as shown in particular in figures 3A and 3B, said tubular elements 2 each have a shaped cross-section, defined essentially by a curved top portion 2A and a pair of flat and inclined side walls 2B extending symmetrically with respect to a substantially vertical axis X-X and diverging towards the outside, connected inferiorly to each other by means a substantially flat base portion 2C.

In particular, advantageously, the top portions 2A of said tubular elements 2 substantially form the upper surface of the panel 1, suitable in use to remain substantially above the surface of the culture liquid, while said base portions 2C, and consequently said lower openings 22, are suitable to be immersed in the same liquid when the panel 1 is in use.

Advantageously, due to the particular configuration of said tubular elements 2, and to their specific dimensional ratios, said seats 20 have a "funnel" section which is "optimized" for the desired use, as explained hereinafter in greater detail.

In effect, advantageously, the top portion 2A of said tubular elements 2 is shaped to essentially follow the contour of a semicircle with a radius R and therefore the upper opening 21 and the entry channel of the seat 20, defined between two contiguous tubular elements 2, are consequently rather broad, then narrow gradually toward the lower opening 22 due to the diverging shape of the side walls 2B.

Advantageously, as shown in figure 3A, said inclined side walls 2B of said tubular elements 2 are directly connected to the base portion 2C without thereby forming connecting undercuts in the lower openings 22 of said seats 20, which would be detrimental to the root system during the growth phase, making furthermore the subsequent extraction operations of the same difficult.

Said seats 20 are configured such that the width A1 of the upper opening 21 is about 12 to 15 times greater than the width A2 of the lower opening 22.

Thus, the entry of the seat 20, positioned near the upper opening 21, is very wide, making it very easy to mechanically fill the seats 20 with an inert material and subsequently to position, also mechanically, the seeds therein.

At the same time, the small width A2 of the lower opening 22 prevents seeds of all types from being washed away through said second opening 22, being retained by the side walls 2B of the seat 20 at a height established according to their dimensions, allowing, however, the root system to emerge therethrough.

Furthermore, by means of the rounded configuration of the upper portions 2A of the tubular elements 2, any inert substrate seeds or granules which are accidentally deposited with poor precision on the top surface of the panel 1 would in any case be directed within a seat 20.

The radius of curvature R of the top portions 2A of said tubular elements 2 is substantially equal to about 1/3 of the overall height H1 of said seat 20, i.e. of the distance between said lower opening 22 and said upper opening 21.

This is particularly advantageous since, before proceeding to depositing the seeds in said seats 20, it is possible to remove the excess of inert material previously loaded by means of a special rotating brush machine, thereby easily removing the portion thereof located in particular in the very wide upper area 20A of the seat 20, defined by the semicircular radius portions R of the two contiguous tubular elements 2. Consequently, after the passage of such machine, the portion of inert material lying in the lower area 20B of the seat 20 remains, as shown in figure 3B, as the area is particularly narrow and therefore unreachable by the rotating brushes thereof.

The particular geometry of the seats 20 specified above has been defined in such a way that, following the removal operation described above, more than 50% of the initially deposited inert material is removed.

This allows, first of all, to reduce waste, thus allowing only the sufficient and necessary quantity of inert substrate to be used. Also, advantageously, taking into account the weight of the panel itself and the inert substrate loaded therein, the floating of the same panel occurs in such a way that the free surface of the culture liquid laps essentially the neck of the root of the vegetable, as it is located at a height falling within the lower area 20B of the seat 20, where the inert substrate remains.

Said elongated tubular elements 2 extend transversely between a pair of longitudinally extending support uprights 3, arranged facing each other and advantageously having a height H substantially greater than the height H1 of said tubular elements 2, so as to form corresponding supporting bases 31 for the device 1, keeping said lower openings 22 slightly raised with respect to the support surface, to be used when the panel is not in use.

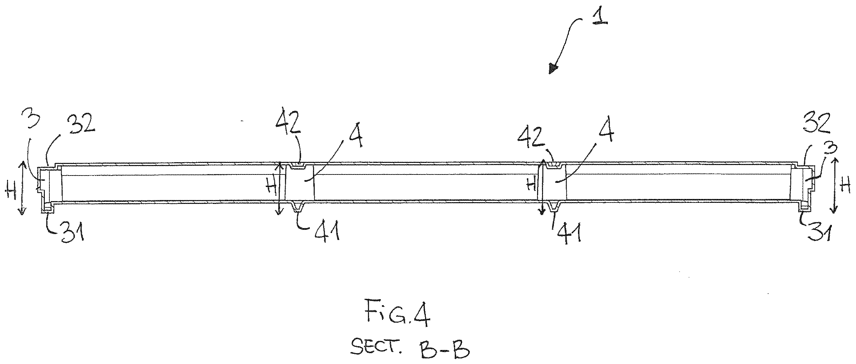

Moreover, as shown in figure 4, said plurality of tubular elements 2 may advantageously be subdivided into sectors by the interposition of reinforcing partitions 4, extending transversely with respect to the extension of said tubular elements 2 and thus parallel to said support uprights 3, having substantially the same height H as the latter.

Preferably, said reinforcing partitions 4 are suitably spaced from one another and are shaped on the bottom so as to define respective support ribs 41 extending essentially for their entire length and having preferably a trapezoidal or quadrangular cross-section, configured so that when said panel 1 is arranged on a support surface, said ribs 41 create intermediate supports between said support bases 31; consequently, if it becomes necessary, such panel 1 is solid and strong enough to be walked on, without the risk of being damaged by bending.

Moreover, advantageously, on the upper surface of said panel 1, near said support uprights 3, corresponding lowered seats 32 are provided, which are essentially rectilinear and extend for the entire length of the corresponding and underlying upright 3; similarly, at said reinforcing partitions 4, blind recesses 42 are made that are essentially rectilinear and extend for the entire length of the corresponding and underlying reinforcement partition 4.

In particular, said lowered seats 32 and said blind recesses 42 of a panel 1 are suitable to accommodate corresponding support bases 31 and support ribs 41 of an identical overlying panel, thereby allowing them to be safely stacked. This is useful, for example, in storing the support devices when not in use, or possibly also during certain cultivation stages, in particular the germination stage, which generally occurs within controlled temperature cells into which the support devices 1 are advantageously placed stacked in order to accommodate the space requirements.

Obviously, the height H of the support uprights 3, and consequently that of the reinforcing partitions 4 near the support ribs 41, will be sufficient to allow for the necessary circulation of humid air between the various support devices 1 when stacked.

Furthermore, according to an advantageous feature, said blind recesses 42 have substantially a shape corresponding to that of the corresponding support ribs 41 of the overlying panel, thus making it possible to have a firm, interlocking coupling between two stacked panels, thereby preventing accidental lateral displacements that may result in the fall of the upper panels.

This also makes it possible to stack in total safety even piles of panels with significant heights, thus increasing the ease of handling of the support devices and therefore the logistics of the entire hydroponic installation.

In conclusion, it is apparent from the foregoing that the shape of a hydroponic culture support device according to the present invention, which is achieved with the independent claim 1, is improved, enabling essentially all the operations necessary for the cultivation of the crop to be carried out mechanically.

In effect, due to the particular configuration of the seats 20, a hydroponic culture support device according to the present invention allows the waste of inert substrate and seeds to be avoided or at least reduced, while at the same time being optimized for floating at the desired level on the culture liquid.

Furthermore, the particular configuration of the seats, together with the fact that said device is preferably made of polymeric material such as polyethylene, favors the extraction of seedlings when developed and facilitates disinfection operations with chemical compounds without damaging the device in any way, allowing it to be re-used later.

Thus, the panel may be used without damage for a variety of cultivation cycles, consisting in preferably mechanized operations of sowing, handling, cutting or automatic product pick-up, washing and final disinfection.

Preferably, the panel is made of fully recyclable polymeric material that may be returned, at the expiration of its use for production purposes, to a plastic recycling center.

Advantageously, a hydroponic culture support device is obtained, configured so as to be stably stackable, that allows savings in terms of the necessary storage space.

Naturally, the present invention is adaptable to numerous applications, modifications or variations without thereby departing from the protective scope as defined by the appended claims.

Moreover, the materials and equipment used for the production of the present invention, as well as the shapes and sizes of the individual components, may be those most suitable according to the specific requirements.

## Claims

1. A support device (1) for hydroponic cultures formed of a panel adapted to float, in use, on a culture liquid, said panel being made of polymeric material and comprising a plurality of distinct and separate hollow tubular elements (2) arranged side-by-side and spaced in parallel apart from each other so as to create a plurality of seats (20) adapted to contain an inert substrate for hydroponic cultures, each of said seat (20) being defined between two adjacent tubular elements (2) and extending between an upper opening (21) and a lower opening (22) wherein said tubular elements (2) each have a shaped cross-section, defined by a curved top portion (2A) and a pair of flat and inclined side walls (2B) extending symmetrically with respect to a vertical axis (X-X) and diverging toward the outside, such that said seats (20) have a substantially funnel-shaped cross section, **characterized in that** said top portions (2A) are each shaped according to the contour of a semicircle, the curvature radius (R) of which is about one third of the height (H1) of said seats (20), each of said seats (20) being configured such that the width (A1) of said upper opening (21) is about 12 to 15 times greater than to the width (A2) of said lower opening (22).

2. A support device (1) according to claim 1, wherein said pair of side walls (2B) are connected to each other at the bottom by means of an essentially flat base portion (2C).

3. A support device (1) according to claim 1 or 2, configured in such that said upper portions (2A) of said tubular elements (2) form an upper surface of said panel (1) suitable to remain when in use substantially above the surface of the culture liquid, said lower openings (22) being immersed in the same liquid when in use.

4. A support device (1) according to any one of the preceding claims, wherein said plurality of tubular elements (2) extend between a pair of parallel and elongated side support uprights (3) having a height (H) greater than the height (H1) of said tubular elements (2), forming at the bottom a corresponding pair of support bases (31).

5. A support device (1) according to claim 4, wherein said plurality of tubular elements (2) is subdivided into sectors by the interposition of reinforcing partitions (4) arranged parallel with said support uprights (3) and having substantially the same height (H) of said support uprights (3).

6. A support device (1) according to claim 5, wherein said reinforcing partitions (4) are shaped on the bottom so as to define respective support ribs (41) having a trapezoidal or quadrangular cross-section and configured to provide corresponding intermediate supports relative to said support bases (31).

7. A support device (1) according to claim 6, wherein on the upper surface of said panel (1) there are provided lowered seats (32) obtained near said side uprights (3) and blind recesses (42) obtained near said reinforcing partitions (4), said lowered seats (32) and said blind recesses (42) being configured to accommodate respective support bases (31) and support ribs (41) of an overlying panel (1).

8. A support device (1) according to any one of the preceding claims, made of polyethylene using blow-molding technology.

## Patentansprüche

1. Trägervorrichtung (1) für Hydrokulturen, die aus einer Platte besteht, die so eingerichtet ist, dass sie in Funktion auf einer Kulturflüssigkeit schwimmt, wobei die Platte aus Polymermaterial besteht und eine Vielzahl unterschiedlicher und separater hohler Röhren-Elemente (2) umfasst, die nebeneinander und voneinander beabstandet parallel angeordnet sind und eine Vielzahl von Aufnahmen (20) bilden, die so eingerichtet sind, dass sie ein inertes Substrat für Hydrokulturen aufnehmen, wobei jede der Aufnahmen (20) zwischen zwei benachbarten Röhren-Elementen (2) ausgebildet ist und sich zwischen einer oberen Öffnung (21) und einer unteren Öffnung (22) erstreckt, wobei
die Röhren-Elemente (2) jeweils einen geformten Querschnitt haben, der durch einen gekrümmten oberen Abschnitt (2A) sowie ein Paar flache und geneigte Seitenwände (2B) gebildet wird, die sich symmetrisch in Bezug auf eine vertikale Achse (X-X) erstrecken und nach zur Außenseite hin auseinanderlaufen, so dass die Aufnahmen (20) einen im Wesentlichen trichterförmigen Querschnitt haben,
**dadurch gekennzeichnet, dass**
die oberen Abschnitte (2A) jeweils entsprechend der Kontur eines Halbkreises geformt sind, dessen Krümmungsradius (R) ungefähr ein Drittel der Höhe (H1) der Aufnahmen (20) beträgt, wobei jede der Aufnahmen (20) so ausgeführt ist, dass die Breite (A1) der oberen Öffnung (21) ungefähr 12 bis 15 mal größer ist als die Breite (A2) der unteren Öffnung (22).

2. Trägervorrichtung (1) nach Anspruch 1, wobei die paarigen Seitenwände (2B) an der Unterseite mittels eines im Wesentlichen flachen Basisabschnitts (2C) miteinander verbunden sind.

3. Trägervorrichtung (1) nach Anspruch 1 oder 2, die so ausgeführt ist, dass die oberen Abschnitte (2A) der Röhren-Elemente (2) eine Oberseite der Platte (1) bilden, die geeignet ist, in Funktion im Wesentlichen über der Oberfläche der Kulturflüssigkeit zu verbleiben, wobei die unteren Öffnungen (22) in Funktion in diese Flüssigkeit eingetaucht sind.

4. Trägervorrichtung (1) nach einem der vorangehenden Ansprüche, wobei sich die Vielzahl von Röhren-Elementen (2) zwischen einem Paar paralleler und länglicher seitlicher Stützpfosten (3) erstreckt, die eine Höhe (H) haben, die größer ist als die Höhe (H1) der Röhren-Elemente (2), so dass an der Unterseite ein entsprechendes Paar von Tragesockeln (31) gebildet wird.

5. Trägervorrichtung (1) nach Anspruch 4, wobei die Vielzahl von Röhren-Elementen (2) durch zwischen ihnen angeordnete verstärkende Trennwände (4), die parallel zu den Stützpfosten (3) angeordnet sind und im Wesentlichen die gleiche Höhe (H) haben wie die Stützpfosten (3), in Sektoren unterteilt werden,.

6. Trägervorrichtung (1) nach Anspruch 5, wobei die verstärkenden Trennwände (4) an der Unterseite so geformt sind, dass sie jeweilige Stützrippen (41) bilden, die einen trapezförmigen oder viereckigen Querschnitt haben und so ausgeführt sind, dass sie entsprechende Zwischenstützen in Bezug auf die Stützsockel (31) bilden.

7. Trägervorrichtung (1) nach Anspruch 6, wobei sich an der Oberseite der Platte (1) abgesenkte Aufnahmen (32), die in der Nähe der seitlichen Stützen (3) ausgebildet sind, sowie Blindvertiefungen (42) befinden, die in der Nähe der verstärkenden Trennwände (4) ausgebildet sind, wobei die abgesenkten Aufnahmen (32) und die Blindvertiefungen (42) so ausgeführt sind, dass sie jeweilige Stützsockel (31) und Stützrippen (41) einer darüber liegenden Platte (1) aufnehmen.

8. Trägervorrichtung (1) nach einem der vorangehenden Ansprüche, hergestellt aus Polyethylen unter Verwendung von Blasformtechnologie.

## Revendications

1. Dispositif de support (1) pour cultures hydroponiques formé d'un panneau apte à flotter, en utilisation, sur un liquide de culture, ledit panneau étant fabriqué en matériau polymère et comprenant une pluralité d'éléments (2) tubulaires creux distincts et séparés disposés côte à côte et espacés parallèlement l'un de l'autre de manière à créer une pluralité de sièges (20) adaptés pour contenir un substrat inerte pour cultures hydroponiques, chacun desdits sièges (20) étant défini entre deux éléments (2) tubulaires adjacents et s'étendant entre une ouverture supérieure (21) et une ouverture inférieure (22), dans lequel lesdits éléments (2) tubulaires ont chacun une section transversale en forme, définie par une partie supérieure (2A) incurvée et une paire de parois latérales (2B) plates et inclinées s'étendant symétriquement par rapport à un axe vertical (X-X) et divergeant vers l'extérieur, de telle sorte que lesdits sièges (20) présentent une section transversale sensiblement en forme d'entonnoir, **caractérisé en ce que** lesdites parties supérieures (2A) ont chacune une forme selon le contour d'un demi-cercle, dont le rayon de courbure (R) est d'environ un tiers de la hauteur (H1) desdits sièges (20), chacun desdits sièges (20) étant configuré de telle sorte que la largeur (A1) de ladite ouverture supérieure (21) est environ 12 à 15 fois supérieure à la largeur (A2) de ladite ouverture inférieure (22).

2. Dispositif de support (1) selon la revendication 1, dans lequel ladite paire de parois latérales (2B) est reliée l'une à l'autre par le bas au moyen d'une partie de base (2C) essentiellement plate.

3. Dispositif de support (1) selon la revendication 1 ou 2, configuré de sorte que lesdites parties supérieures (2A) desdits éléments (2) tubulaires forment une surface supérieure dudit panneau (1) apte à rester en service sensiblement au-dessus de la surface du liquide de culture, lesdites ouvertures inférieures (22) étant immergées dans le même liquide lors de leur utilisation.

4. Dispositif de support (1) selon l'une quelconque des revendications précédentes, dans lequel ladite pluralité d'éléments (2) tubulaires s'étendent entre une paire de montants de support (3) latéraux parallèles et allongés ayant une hauteur (H) supérieure à la hauteur (H1) desdits éléments (2) tubulaires, formant à la base une paire correspondante de bases de support (31).

5. Dispositif de support (1) selon la revendication 4, dans lequel ladite pluralité d'éléments (2) tubulaires est subdivisée en secteurs par l'interposition de cloisons (4) de renforcement disposées parallèlement auxdits montants de support (3) et ayant sensiblement la même hauteur (H) desdits montants de support (3).

6. Dispositif de support (1) selon la revendication 5, dans lequel lesdites cloisons (4) de renforcement ont une forme sur le fond afin de définir des nervures de support (41) respectives ayant une section transversale trapézoïdale ou quadrangulaire et configurées pour fournir des supports intermédiaires correspondants par rapport auxdites bases de support (31).

7. Dispositif de support (1) selon la revendication 6, dans lequel sur la surface supérieure dudit panneau (1) sont prévus des sièges abaissés (32) obtenus à proximité desdits montants latéraux (3) et des évidements borgnes (42) obtenus à proximité desdites cloisons de renforcement (4), lesdits sièges abaissés (32) et lesdits évidements borgnes (42) étant configurés pour loger des bases de support (31) et des nervures de support (41) respectives d'un panneau (1) recouvrant.

8. Dispositif de support (1) selon l'une quelconque des revendications précédentes, fabriqué en polyéthylène en utilisant la technologie de moulage par soufflage.
